# EUROPEAN PATENT APPLICATION

(11) **EP 2 530 137 A1**
(43) Date of publication of application: **05.12.2012**
(21) Application number: 10844660.0
(22) Date of filing: 20.10.2010
(51) Int. Cl.: C10L 5/44, B09B 3/00

(54) **SOLID FUEL**

(30) Priority: 28.01.2010 JP 2010016978
(71) Applicant: Creative Co. Ltd., Hiroshima 739-0024 (JP)
(72) Inventor: KIYAMA, Michihiro, Higashihiroshima-shi Hiroshima 739-0024 (JP)
(74) Representative: Müller-Boré & Partner Patentanwälte
(86) International application number: PCT/JP2010/068495
(87) International publication number: WO 2011/092906

(57) **Abstract**

[Object] To provide a solid fuel suitable for thermal power generation by making use of the residue left after beneficial seeds, grains or bulbs are collected.

[Solution] A solid fuel which comprises a composition containing 70 wt% or more, on dry basis, of dried *Arundo donax, Leucaena leucocephala, Saccharum officinarum, Manihot esculenta,* straw, seaweed, seagrass or algae and which is hot compression molded.

## Description

### Field of the Invention:

The present invention relates to a solid fuel. More specifically, it relates to a solid fuel making effective use of the residue left after beneficial seeds, grains or bulbs are collected from plants which are cultivated in relatively large quantities or grow in nature.
Much more specifically, it relates to a solid fuel which makes effective use of the above residue obtained from specific plants, produces as small an amount as possible of a harmful gas or residue after combustion, generates a large quantity of heat and leads to the suppression of the production of carbonic dioxide, especially a solid fuel suitable for use as a fuel for thermal power generation.

### Description of the Prior Art:

The causes of global warming which is one of the global environmental issues include an increasing amount of carbon dioxide existent in air. Various approaches to the suppression of the production of carbon dioxide are being made on a global basis. As one of the approaches, the production of biofuels and use of them in automobiles and power boilers as alternatives to fossil fuels such as coal and gasoline are under way. However, use of foods such as corn which are used as raw materials of the biofuels is breaking down ecological balance and economical balance and therefore it cannot be said that this is the best approach. Thus, it is necessary to take global environment into consideration while effects on clothing, food and housing whose balance is indispensable for human lives are minimized. Since this is a very difficult problem to be solved, various studies are under way but the problem is not solved yet. Then, a solid fuel making use of plastics is used in power boilers as an alternative to oil and coal but it cannot be said that its effect of suppressing the production of carbon dioxide is satisfactory.

### Summary of the Invention:

### Problem to Be Solved by the Invention:

Then, the inventors of the present invention conducted intensive studies to develop a solid fuel which makes use of the residue left after beneficial seeds, grains or bulbs are collected and plants growing in nature all of which are produced in relatively large quantities and can be used as a new energy source capable of suppressing the production of carbon dioxide. As a result, they found that certain kinds of plants or residue thereof is solidified to be effectively used as a solid fuel. They also found that the residue can be used especially as a solid fuel for power generation and as a new energy source.

That is, when the residue left after beneficial seeds, grains or bulbs are collected from specific plants is thermally compressed and molded under specific conditions, a hard molded product can be obtained without using a large amount of a binder (for example, a plastic) or a form retaining agent (for example, a rubber or adhesive) intentionally and that the obtained molded product has a sufficiently large calorific value as a solid fuel. Further, they found that, surprisingly, the molded product has sufficiently high hardness and toughness, that is, excellent form retention stability though it contains the residue as the main component. This form retention stability is one of extremely valuable characteristic properties as a solid fuel, especially a fuel for thermal power generation. A solid fuel goes through repetitions of steps such as storage, transportation and unloading after production (molding) before use. During these steps, fragmentation occurs and when fragmentation becomes marked, this product becomes unsuitable for use as an industrial solid fuel.

It was found that the fragmentation and disintegration of the solid fuel according to the present invention hardly occur in these steps after molding before use by users, whereby the solid fuel can retain its form for a long time as an industrial fuel having a suitable molded size, especially a fuel for thermal power generation.

### Means for Solving the Problem:

The present invention was made based on the above finding. According to the present invention, there is provided a solid fuel which comprises a composition containing 70 wt% or more, on dry basis, of dried *Arundo donax, Leucaena leucocephala, Saccharum officinarum, Manihot esculenta,* straw, seaweed, seagrass or algae and is hot compression molded.
According to a preferred aspect of the present invention, there is provided the following solid fuel.
(1) The solid fuel wherein the composition contains 80 wt% or more, on dry basis, of dried *Arundo donax, Leucaena leucocephala, Saccharum officinarum, Manihot esculenta,* straw, seaweed, seagrass or algae.
(2) The solid fuel wherein the composition contains 85 wt% or more, on dry basis, of dried *Arundo donax, Leucaena leucocephala, Saccharum officinarum, Manihot esculenta,* straw, seaweed, seagrass or algae.
(3) The solid fuel which is obtained by compression molding the composition at a temperature of 80 to 150°C.
(4) The solid fuel wherein the composition contains 80 wt% or more, on dry basis, of *Arundo donax.*
(5) The solid fuel wherein the composition contains 80 wt% or more, on dry basis, of *Leucaena leucocephala.*
(6) The solid fuel wherein the composition contains 80 wt% or more, on dry basis, of *Saccharum officinarum.*
(7) The solid fuel wherein the composition contains 80 wt% or more, on dry basis, of *Manihot esculenta.*
(8) The solid fuel wherein the composition contains 80 wt% or more, on dry basis, of straw.
(9) The solid fuel wherein the composition contains 80 wt% or more, on dry basis, of seaweed.
(10) A solid fuel wherein the composition contains 80 wt% or more, on dry basis, of seagrass.
(11) The solid fuel wherein the composition contains 80 wt% or more, on dry basis, of algae.
(12) The solid fuel having a calorific value of 15 to 30 Mj /kg.
(13) The solid fuel having an average size of 15 to 3,500 cm³.
(14) The solid fuel having an apparent specific gravity of 0.3 to 0.6 g/cm³.
(15) The solid fuel having a fragmentation ratio of 5 wt% or less in a form retention stability test.
(16) The solid fuel which is used for power generation.
(17) Use of the above solid fuel as a fuel for power generation.

### Effect of the Invention:

According to the present invention, there can be provided a solid fuel molded product having excellent form retention stability by making use of the residue of a certain kind of a plant which is cultivated in large quantities and used as food or feed. Particularly, there can be provided a solid fuel molded product as a solid fuel substantially composed of a plant residue, especially a solid fuel for power generation. Therefore, the solid fuel of the present invention is substantially formed from a plant in nature, does not produce a harmful gas and leads to the suppression of carbon dioxide.

### Detailed Description of the Preferred Embodiment:

Dried *Arundo donax, Leucaena leucocephala, Saccharum officinarum, Manihot esculenta*, straw, seaweed, seagrass or algae is used as the main raw material of the solid fuel of the present invention. It is a dried product of the residue (stalk or leaf) left after beneficial seeds, grains or bulbs are collected.
The dried product may be a product which is dried to some extent though it contains a small amount of water. The dried product can be used as it is or after it is cut.
The above plants are described hereinunder.
(a) *Arundo donax* is a gramineous herbaceous perennial which grow near the coast of a warm place.
   It is also known as "yoshitake" (or giant reed). Although it is arundinaceous, it is much larger than a reed and grows up to 2 to 4 m, and its stalk is as thick as a bamboo. Its rhizome is short, crawls horizontally and becomes bushy. Its leaves are wide and linear, and their ends extend thinly.
(b) *Leucaena leucocephala* is a mimosaceous dediduous shrub.
   The amount of biomass produced by this plant per year is incommensurably larger than those of other plants, and some Southeast Asian developing countries into which this plant was imported in the past likewise actively make use of biomass produced by this plant.
(c) *Saccharum officinarum* is a gramineous plant which belongs to the family *Saccharum.* The press cake of *Saccharum officinarum* is called "bagasse". The bagasse is industrially used as a raw material for the production of pulp for paper making and furfural, wax (sugarcane wax) can be extracted from the bagasse, and octacosanol is separated from the bagasse. It may also be used as a raw material of a medium for the cultivation of cloud ear mushrooms.
(d) *Manihot esculenta* is a euphorbiaceous tropical shrub which belongs to the family Evodiopanax innovans. Its tubercle is a raw material of tapioca, and it is cultivated in the tropical zone in the world. Its leaf is composed of 5 to 10 follicles and its stalk rises vertically. Several tubercles are grown at the root of the stalk like a gentle concentric circle. The tubercle has a thin shape with sharp ends.
(e) Straw is the dried stalk of a gramineous plant such as rice or wheat. The straw now tends to be treated as a very precious thing. According to recent studies, experiments on the production of bioethanol are carried out.
(f) Seaweed is a collective term for marine seaweed which is grossly visible. This means marine "seaweed" and does not include seed plants.
(g) Seagrass is a seed plant which grows in the sea and marine waterweed. It is homonymous with seaweed which is algae but this may be pronounced as "umikusa" as it is hardly distinguished from seaweed when it is pronounced as "kaisou".
(h) Algae refer to aquatic photosynthetic eukaryotes.

The solid fuel of the present invention comprises a composition which should contain 70 wt% or more, preferably 80 wt% or more, on dry basis, of a dried product of the above residue, or may contain substantially 100 wt% of the dried product. However, the composition may contain another component derived from a natural product, for example, a binder such as rubber or starch, in an amount of less than 30 wt%, preferably less than 20 wt%, particularly preferably less than 15 wt%.

Out of the above plants, *Arundo donax, Leucaena leucocephala, Saccharum officinarum, Manihot esculenta* or straw is preferred, and *Arundo donax, Leucaena leucocephala* or *Saccharum officinarum* is particularly preferred.

To mold the solid fuel of the present invention, the above composition (particularly a fragmented dried product) should be compression molded at a temperature of 80 to 150°C, preferably 100 to 130°C. For thermal compression, a single-screw or double-screw hot extruder may be used.
It is particularly desirable to use a double-screw extruder. The composition compression extruded from the extruder is discharged from a circular nozzle and cut to a suitable length so as to obtain a cylindrical molded product.
At this point, a solid fuel having a desired size can be obtained by setting the diameter of the circular nozzle to 25 to 50 mm, preferably 30 to 40 mm and the cut length to 20 to 70 mm, preferably 25 to 65 mm.

Since the solid fuel of the present invention is preferably manufactured by the above molding method from the industrial point of view, its shape is preferably cylindrical or prismatic, particularly preferably cylindrical. As for the size of the solid fuel, its average volume is 15 to 3,500 cm³, preferably 20 to 1,000 cm³.
The apparent specific gravity of the solid fuel is 0.3 to 0.6 g/cm³, preferably 0.4 to 0.5 g/cm³.

The solid fuel has a stable calorific value of 15 to 30 MJ/kg, preferably 20 to 28 MJ/kg. Therefore, the solid fuel of the present invention has a highly stable calorific value and excellent form retention stability and is therefore advantageously used as a fuel for thermal power generation.

### Examples:

A form retention stability test was made on solid fuels obtained in Examples by the following method.
100 kg of the solid fuel was put into a metal can (drum can) having a capacity of 200 liters, the can was rolled 100 m on a flat asphalt road for 3 minutes, and this was repeated 5 times (a total of 1,000 m). Thereafter, the solid fuel was taken out from the metal can and the ratio (%) of the solid fuel passing through a sieve having an opening of 10 mm or less was taken as form retention stability.

### (evaluation criteria)

The ratio (weight) of the solid fuel passing through a sieve having an opening of 10 mm or less was calculated and evaluated based on the following criteria.
0 to 5 % or less: satisfactory
6 to 10 % or less: acceptable
11 to 15 %: unsatisfactory

### [Examples 1 to 8]

Cylindrical solid fuels having an extrusion diameter of about 50 mm (length of 65 mm) were obtained from the residues of plants shown in Table 1 below as raw material compositions (each composition contained 80 wt% of the dried residue and 20 wt% of natural rubber) by means of a double-screw extruder heated at 130°C. The apparent specific gravity (bulk specific gravity), calorific value and form retention stability test result of each of the obtained solid fuels are shown in Table 1 below.

**Table 1**

| | Product | | Size mm | Bulk specific gravity g/cm | Calorific value | | |
|---|---|---|---|---|---|---|---|
| | Type | Type of raw material (80 wt% or more) | | | Joule (MJ/kg) | Calorie (cal/g) | Form retention stability |
| Ex. 1 | Solid (sample (1)) | Arundo donax | 50 | 0.47 | 26.86 | 6415.4 | satisfactory |
| Ex. 2 | Solid (sample (2)) | Leucaena leucocephala | 50 | 0.51 | 25.11 | 5997.4 | satisfactory |
| Ex. 3 | Solid (sample (3)) | Saccharum officinarum | 50 | 0.48 | 26.43 | 6312.7 | satisfactory |
| Ex. 4 | Solid (sample (4)) | Manihot esculenta | 50 | 0.52 | 22.10 | 5278.5 | satisfactory |
| Ex. 5 | Solid (sample (5)) | Straw | 50 | 0.45 | 24.62 | 5880.4 | satisfactory |
| Ex. 6 | Solid (sample (6)) | Seaweed | 50 | 0.55 | 24.84 | 5932.9 | satisfactory |
| Ex. 7 | Solid (sample (7)) | Seagrass | 50 | 0.51 | 22.89 | 5467.2 | satisfactory |
| Ex. 8 | Solid (sample (8)) | Algae | 50 | 0.54 | 20.22 | 4829.5 | satisfactory |

## Claims

1. A solid fuel which comprises a composition containing 70 wt% or more, on dry basis, of dried *Arundo donax, Leucaena leucocephala, Saccharum officinarum, Manihot esculenta,* straw, seaweed, seagrass or algae and which is hot compression molded.

2. The solid fuel according to claim 1, wherein the composition contains 80 wt% or more, on dry basis, of dried *Arundo donax, Leucaena leucocephala, Saccharum officinarum, Manihot esculenta,* straw, seaweed, seagrass or algae.

3. The solid fuel according to claim 1, wherein the composition contains 85 wt% or more, on dry basis, of dried *Arundo donax, Leucaena leucocephala, Saccharum officinarum, Manihot esculenta,* straw, seaweed, seagrass or algae.

4. The solid fuel according to claim 1 which is obtained by compression molding the composition at a temperature of 80 to 150°C.

5. The solid fuel according to claim 1, wherein the composition contains 80 wt% or more, on dry basis, of *Arundo donax.*

6. The solid fuel according to claim 1, wherein the composition contains 80 wt% or more, on dry basis, of *Leucaena leucocephala.*

7. The solid fuel according to claim 1, wherein the composition contains 80 wt% or more, on dry basis, of *Saccharum officinarum.*

8. The solid fuel according to claim 1, wherein the composition contains 80 wt% or more, on dry basis, of *Manihot esculenta.*

9. The solid fuel according to claim 1, wherein the composition contains 80 wt% or more, on dry basis, of straw.

10. The solid fuel according to claim 1, wherein the composition contains 80 wt% or more, on dry basis, of seaweed.

11. The solid fuel according to claim 1, wherein the composition contains 80 wt% or more, on dry basis, of seagrass.

12. The solid fuel according to claim 1, wherein the composition contains 80 wt% or more, on dry basis, of algae.

13. The solid fuel according to claim 1 having a calorific value of 15 to 30 Mj/kg.

14. The solid fuel according to claim 1 having an average size of 15 to 3,500 cm³.

15. The solid fuel according to claim 1 having an apparent specific gravity of 0.3 to 0.6 g/cm³.

16. The solid fuel according to claim 1 having a fragmentation ratio of 5 wt% or less in a form retention stability test.

17. The solid fuel according to claim 1 which is used for power generation.

18. Use of the solid fuel of claim 1 as a fuel for power generation.
